# EUROPÄISCHE PATENTSCHRIFT

(11) **EP 0 930 336 B1**
(45) Veröffentlichungstag und Bekanntmachung des Hinweises auf die Patenterteilung: **15.10.2003**
(21) Anmeldenummer: 99100528.1
(22) Anmeldetag: 13.01.1999
(51) Int. Cl.: C08L 23/08, C08L 23/10, C08L 23/16

(54) **Thermoplastische Elastomere guter Einfärbbarkeit und hoher Festigkeit und Elastizität sowie daraus hergestellte hochschlagzähe Polymerblends**
Thermoplastic elastomers with good paintability, high resistance and elasticity and high impact resistant polymer blends prepared therefrom
Elastomère thermoplastique avec une bonne affinité pour les colorants, une grande résistance et élasticité ainsi comme melanges de polymères résistantes à l'impact preparés à partir de celui-ci

(30) Priorität: 19.01.1998 DE 19801687
(43) Veröffentlichungstag der Anmeldung: 21.07.1999
(73) Patentinhaber: Borealis GmbH, 2323 Schwechat-Mannswörth (AT)
(72) Erfinder: Rätzsch, Manfred, Prof. Dr., 4202 Kirchschlag (AT); Reichelt, Norbert Dr., 4501 Neuhofen (AT); Hesse, Achim, Dr., 4021 Linz (AT); Bucka, Hartmut, Dipl.-Ing., 4622 Eggendorf (AT); Stolp, Matthias, Dr., 06217 Merseburg (DE); Radusch, Hans-Joachim, Prof. Dr., 06667 Weissenfels (DE)
(74) Vertreter: Schinke, Herbert, Dr. Dr.,

(56) Entgegenhaltungen:
- EP-A- 0 450 342
- EP-A- 0 601 455
- EP-A- 0 688 817

## Beschreibung

Die Erfindung betrifft thermoplastische Elastomere guter Einfärbbarkeit und hoher Festigkeit und Elastizität sowie daraus hergestellte hochschlagzähe Polymerblends, die für den Einsatz in der Fahrzeugindustrie, in der Haushaltsgeräteindustrie und in der Medizintechnik geeignet sind. Die Erfindung betrifft ebenfalls ein Verfahren zur Herstellung dieser thermoplastischen Elastomere.

Thermoplastische Elastomere wie Styrol-Butadien-Blockcopolymere, thermoplastische Polyurethane, Polyesteramide, Polyätheramide, thermoplastische Copolyester-Elastomere und Polyolefinlegierungen mit Elastomeren sind bekannt [ Rader, C., Kunststoffe 83(1993)10, 777-781; Kunststoffe 86(1996)12, 1845-1851].

Der besondere Vorteil von Polyolefinlegierungen mit Elastomeren als thermoplastische Elastomere besteht in der einfachen Verarbeitbarkeit und günstigen Recyclingfähigkeit dieser Produkte.

Maßgeblich für die Werkstoffeigenschaften thermoplastischer Elastomerer auf Basis von Polyolefinlegierungen mit Elastomeren wie Festigkeit und Elastizität sind die Zusammensetzung der Polyolefinkomponente und der Elastkomponente und die Verteilung der Elastkomponente in der Polyolefinkomponente (Moore, P., Polypropylene Handbook, Carl Hanser-Verlag München 1996, 218-225).

Bekannte Elastkomponenten für thermoplastische Elastomere auf Basis von Polypropylen sind Ethylen-Propylen-Elastomere (EP 672 712: EP 614940), Ethylen-Propylen-Dien-Elastomere (EP 547 843; EP 409542). Ethylen-Vinylacetat-Copolyere [ BE 899507; Coran, A. Rubber Chem. Technol. 54(1981), 892], chlorsulfoniertes Polyethylen (US 41 41 878), elastomere Copolymere aus Ethylen und C₄-C₈-Olefinen wie elastomere Ethylen-Buten-Copolymere [Kautschuk-Gummi-Kunststoffe 49(1996)12, 812-813]], Ethylen-Hexen-Copolymere oder Ethylen-Octen-Copolymere [Yu, T. , J. Plastic Film&Sheeting 10(1994)1, 539-564] sowie elastomere ataktische Polypropylene (EP 334 829) in Anteilen von 35 bis 70 Masse%, bezogen auf die Polyolefinmischung.

Bekannt ist weiterhin, in Polyolefinlegierungen auf Basis Polypropylen/ Ethylen-Propylen-Dien-Elastomeren die Elastkomponente durch Zusätze wie Dodecylmercaptan (DE 26 20 820), Schwefel ( EP 336780) oder Tetrabutylthiuramdisulfid (EP 376 213) zu vulkanisieren. Diese Rezepturen haben jedoch den Nachteil einer starken Verfärbung, so daß Halbzeuge und Formstoffe aus diesen Materialien nur schwarz eingefärbt zum Einsatz kommen können.

Thermoplastische Elastomere auf Basis von Polypropylenen und elastomeren C₄-C₈-Olefinen besitzen eine ausgezeichnete Einfärbbarkeit, aber ein bedeutend niedrigeres Festigkeitsniveau gegenüber thermoplastischen Elastomeren auf Basis von Polypropylenen und vulkanisierten Ethylen-Propylen-Dien-Elastomeren.

Bei Rezepturen aus Polypropylenen und elastomeren Ethylen-Hexen-Copolymeren ist die Modifizierung der Blends durch Elektronenbestrahlung bekannt (JP 96 301 927).

Bekannt ist ebenfalls die Schlagzähmodifizierung von Polypropylenen durch Zusatz von 10-35 Gew.% an amorphen Ethylen-Propylen-Dien-Elastomeren [Michaeli, W.. Kunststoffberater (1990)3, 38-43: Kloos, F., Angewandte Makromolekulare Chemie 185/186(1991), 97-108], Ethylen-Propylen-Elastomeren [Kim, B., J. Applied Polymer Sci. 60(1996), 2207-2218, J. Applied Polymer Sci. 60(1996), 1391-1403], ebenfalls in Form von Reaktorblends aus Polypropylen und Ethylen-Propylen-Kautschuk [Kresge, E., Macromol.Symp. 53(1992), 173-189. Schwager. H., Kunststoffe 82(1992)6. 499-501], Ethylen-Buten-Elastomeren [Yu, C., SPE-ANTEC'94. 2439-2442; SPE-ANTEC'96, 1995-2000], Ethylen-Hexen-Copolymeren [J 08 301 927, Yamaguchi, M., J.Appl. Polymer Sci. 63(1997). 467-474] und Ethylen-Octen-Elastomeren [EP 0 769 525, J 97 48 920].

Die Aufgabe der vorliegenden Erfindung bestand in der Entwicklung von thermoplastischen Elastomeren, die eine gute Einfärbbarkeit und gleichzeitig eine hohe Festigkeit und Elastizität besitzen, sowie in der Entwicklung daraus hergestellter hochschlagzäher Polymerblends.

Überraschenderweise wurde gefunden, dass durch Compoundierung von Propylen-Homopolymeren und/oder Propylen-Copolymeren mit elastomeren C₄-C₁₂-Olefin-Co-und/oder - Terpolymeren und C₈-C₁₄-Diacrylaten, C₇-C₁₆-Diallylverbindungen, C₉-C₁₅-Dimethacrylaten, C₇-C₁₀-Divinylverbindungen, C₁₂-C₁₇-Acrylsäureestern von Polyalkoholen, C₁₅-C₂₁-Methacrylsäureestern von Polyalkoholen und/oder C₉- C₁₂-Triallylverbindungen als ungesättigte Monomere, gegebenenfalls in Gegenwart thermisch zerfallender Radikalbildner, thermoplastische Elastomere mit einer sehr feindispersen Verteilung der Elastkomponente in der Polyolefinkomponente gebildet werden, die diese Anforderungen erfüllen.

Die erfindungsgemäße Aufgabe wurde durch thermoplastische Elastomere guter Einfärbbarkeit und hoher Festigkeit und Elastizität, deren eingelagerte Elastomerpartikel einen mittleren Partikeldurchmesser von 0,1 bis 1 µm, haben, aus Propylen-Homopolymeren und/oder Propylen-Copolymeren, Elastomeren, ungesättigten Monomeren, gegebenenfalls thermisch zerfallenden Radikalbildnem und Hilfsstoffen gelöst, wobei die thermoplastischen Elastomere nach einem Verfahren hergestellt worden sind, bei dem Mischungen aus 20 bis 80 Masse%, bevorzugt 40 bis 60 Masse%, Propylen-Homopolymeren und/oder Propylen-Copolymeren, 80 bis 20 Masse%, bevorzugt 60 bis 40 Masse%, Ethylen-Buten-Copolymeren, Ethylen-Hexen-Copolymeren und/oder Ethylen-Octen-Copolymeren, 0,10 bis 4,0 Masse%, bevorzugt 0,2 bis 1,5 Masse%, bezogen auf die Summe der eingesetzten Polymere, C₇-C₁₆-Diallylverbindungen, C₇-C₁₀-Divinylverbindungen und/oder C₉-C₁₂-Triallylverbindungen als ungesättigte Monomere und 0 bis 4,0 Masse%, bevorzugt 0,2 bis 1,5 Masse%, bezogen auf die Summe der eingesetzten Polymere, Acylperoxiden, Alkylperoxiden, Hydroperoxiden, Peroxycarbonaten, Perestem, Ketonperoxiden, Peroxiketalen und/oder Azoverbindungen als thermisch zerfallende Radikalbildner in der Schmelze umgesetzt worden sind, wobei vor und/oder nach der Umsetzung als Zusatzstoffe 0,01 bis 2,5 Masse% Stabilisatoren, 0,1 bis 1 Masse% Antistatika, 0,2 bis 3 Masse% Pigmente, 0,05 bis 1 Masse% Nukleierungsmittel, 5 bis 40 Masse% Füll- und/oder Verstärkerstoffe, 2 bis 20 Masse% Flammschutzmittel und/oder 0,01 bis 1 Masse% Verarbeitungshilfsmittel, jeweils bezogen auf die Summe der eingesetzten Polymere, zugesetzt werden können.

Die feindisperse Verteilung der Elastkomponente in der Polyolefinkomponente, die bei den erfindungsgemäßen thermoplastischen Elastomeren im µm-Bereich liegt, lässt sich aus transmissionselektronenmikroskopischen Aufnahmen bestimmen.

As thermisch zerfallende Radikalbildner werden vorzugsweise Radikalbildner mit Halbwertszeiten von 20 s bei Temperaturen über 150 °C eingesetzt.

Die Propylen-Homopolymere sind erfindungsgemäß bevorzugt weitgehend isotaktische Propylen-Homopolymere, insbesondere isotaktische Propylen-Homopolymere, die unter Anwendung von Ziegler-Natta-Katalysatoren oder Metallocenkatalysatoren hergestellt worden sind. Besonders geeignet sind dabei Propylen-Homopolymere mit bimodaler Molmassenverteilung, Molmassen-Gewichtsmitteln M_{w} von 500000 bis 1500000 g/mol, Molmassen-Zahlenmitteln Mₙ von 25000 bis 100000 g/mol und M_{w}/Mₙ-Werten von 5 bis 60, die in einer Reaktorkaskade hergestellt wurden.

Bevorzugt werden für die erfindungsgemäßen thermoplastischen Elastomere ebenfalls Copolymere aus Propylen und α-Olefinen mit 2 bzw. 4 bis 18 C-Atomen, insbesondere statistische Propylen-Copolymere, Propylen-Blockcopolymere und/oder statistische Propylen-Blockcopolymere

Eine bevorzugte Variante als Propylen-Homopolymere und/oder Propylen-Copolymere für die erfindungsgemäßen thermoplastischen Elastomere bilden ebenfalls Mischungen aus 50 bis 98 Masse% an weitgehend isotaktischen Propylen-Homopolymeren und/oder Copolymeren aus Propylen und α-Olefinen mit 2 bzw. 4 bis 18 C-Atomen und 2 bis 50 Masse% an nichtisotaktischen Propylen-Homopolymeren, weitgehend amorphen Propylen-Homopolymeren und/oder Propylen-Copolymeren und/oder nichtlinearen modifizierten Propylen-Homopolymeren und/oder Propylen-Copolymeren.

Die nichtisotaktischen Propylen-Homopolymere, die gegebenenfalls in den erfindungsgemäßen thermoplastischen Elastomeren enthalten sein können, sind elastomere hochmolekulare Propylenhomopolymere mit einem Schmelzpunkt von 145 bis 165°C, einer Schmelzviscosität von 200000 bis 2000000 cps bei 190°C, einer Kristallisationswärme von 4 bis 10 cal/g und einem löslichen Anteil in Diethylether von 35 Masse% bis 55 Masse%. Beispiele für diese nichtisotaktischen Propylen-Homopolymere sind die in EP 475 307 oder EP 475 308 beschriebenen Produkte.

Die weitgehend amorphen Propylen-Homopolymere und/oder Propylen-Copolymere, die gegebenenfalls in den erfindungsgemäßen thermoplastischen Elastomeren enthalten sein können, besitzen einen Anteil an kristallinem Polypropylen bzw. kristallinem Propylen-Copolymer unter 10 Masse%, eine Schmelzenthalpie unter 40 J/g und einen Schmelzindex von 0.1 bis 100 g/10 min bei 230°C/2, 16 kg, wobei das weitgehend amorphe Polypropylen ein Homopolymer des Propylens und/oder ein Copolymer des Propylens aus mindestens 80 Mol % Propylen und höchstens 20 Mol % eines oder mehrerer α-Olefine der allgemeinen Formel CH₂=CHR ist, da bei ist R ein linearer oder verzweigter Alkylrest mit 2 bis 8 Kohlenstoffatomen. Diese amorphen Propylen-Homopolyrrere und/oder Propylen-Copolymere sind insbesondere Stereoblock - Propylen-Homopolymere und/oder Propylen-Copolymere, die beispielsweise unter Anwendurg hochaktiver, Metalloxid-fixierter Ziegler-Natta-Katalysatoren [Collette, J., Macromolecules 22 (1989), 3851-3858: DE 2830160] oder löslicher Ziegler-Natta-Katalysatoren [de Candia. F., Makromol. Chem. 189 (1988), 815-821], gegebenenfalls unter nachfolgender Reaktivmodifizierung ( EP 636863) und/oder Degradation (EP 640 850), hergestellt werden.

Die nichtlinearen modifizierten Propylen-Homopolymere und/oder Propylen-Copolymere, die gegebenenfalls in den erfindungsgemäßen thermoplastischen Elastomeren enthalten sein können, besitzen Schmelzindices von 0,1 bis 30 g/10 min bei 230°C/2,16 kg und einem Quotienten aus der Grenzviscosität des nichtlinearen modifizierten Propylen-Homopolymeren und/oder Propylen-Copolymeren und der Grenzviscosität des linearen Propylen-Homopolymeren und/oder Propylen-Copolymeren mit weitgehend gleichem Molmassen-Gewichtsmittel von 0,20 bis 0,99. Diese nichtlinearen modifizierten Propylen-Homopolymere und/oder Propylen-Copolymere werden durch radikalische Kopplungsreaktionen (Modifizierung von Propylen-Homopolymeren und/oder Propylen-Copolymeren mit ionisierender Strahlung bzw. thermisch zerfallenden Radikalbildnern, gegebenenfalls unter Zusatz von mehrfunktionell ethylenisch ungesättigten Monomeren) oder durch polymeranaloge Umsetzungen funktionalisierter Propylen-Homopolymere und/oder Propylen-Copolymere hergestellt.

Beispiele für diese durch radikalische Kopplungsreaktionen erzeugten nichtlinearen modifizierten Propylen-Homopolymere und/oder Propylen-Copolymere sind insbesondere :
- modifizierte Propylen-Homopolymere und/oder Propylen-Copolymere durch Umsetzung von Propylen-Homopolymeren und/oder Propylen-Copolymeren mit Bismaleimidoverbindungen in der Schmelze (EP 574 801 ; EP 574804),
- modifizierte Propylen-Homopolymere und/oder Propylen-Copolymere durch Behandlung von Propylen-Homopolymeren und/oder Propylen-Copolymeren mit ionisierender Strahlung in fester Phase (EP 190889: EP 634454).
- modifizierte Propylen-Homopolymere und/oder Propylen-Copolymere durch Behandlung von Propylen-Homopolymeren und/oder Propylen-Copolymeren mit Peroxiden in fester Phase (EP 384431; DE 4340194) bzw. in der Schmelze (EP 142 724),
- modifizierte Propylen-Homopolymere und/oder Propylen-Copolymere durch Behandlung von Propylen-Homopolymeren und/oder Propylen-Copolymeren mit mehrfunktionell ethylenisch ungesättigten Monomeren unter Einwirkung ionisierender Strahlung (EP 678527),
- modifizierte Propylen-Homopolymere und/oder Propylen-Copolymere durch Behandlung von Propylen-Homopolymeren und/oder Propylen-Copolymeren mit mehrfunktionell ethylenisch ungesättigten Monomeren in Gegenwart von Peroxiden in der Schmelze (EP 688817; EP 450342).

Weiterhin werden als nichtlineare modifizierte Propylen-Homopolymere und/oder Propylen-Copolymere, die gegebenenfalls in den erfindungsgemäßen thermoplastischen Elastomeren enthalten sein können, durch polymeranaloge Umsetzung von funktionalisierten Propylen-Homopolymeren und/oder Propylen-Copolymeren, bevorzugt von Säure- und/oder Säureanhydridgruppen enthaltenden Propylen-Homopolymeren und/oder Propylen-Copolymeren, mit mehrfunktionellen Verbindungen entgegengesetzter Reaktivität, bevorzugt mit C₂₋ bis C₁₆ - Diaminen und/oder C₂₋ bis C₁₆ - Diolen, hergestellte nichtlineare modifizierte Propylen-Homopolymere und/oder Propylen-Copolymere bevorzugt.

Beispiele für die durch polymeranaloge Umsetzungen erzeugten nichtlinearen modifizierten Propylen-Homopolymere und/oder Propylen-Copolymere sind insbesondere :
- modifizierte Propylen-Homopolymere und/oder Propylen-Copolymere durch Umsetzung von Maleinsäureanhydrid-gepfropftem Propylen-Homopolymeren und/oder Propylen-Copolymeren mit Diaminen oder Polyglycolen (EP 177401; JP 08 176 365),
- modifizierte Propylen-Homopolymere und/oder Propylen-Copolymere durch Umsetzung von Säure- oder Säureanhydridgruppen enthaltenden Propylen-Homopolymeren und/oder Propylen-Copolymeren mit Epoxy-, Hydroxy- oder Aminogruppen enthaltenden Polymeren (EP 307684; EP 299486).

Eine weitere bevorzugte Variante für nichtlineare modifizierte Propylen-Homopolymere und/oder Propylen-Copolymere, die gegebenenfalls in den erfindungsgemäßen thermoplastischen Elastomeren enthalten sein können, sind nichtlineare modifizierte Propylen-Homopolymere und/oder Propylen-Copolymere, die durch hydrolytische Kondensation von Propylen-Homopolymeren und/oder Propylen-Copolymeren, die hydrolysierbare Silangruppen enthalten, hergestellt werden. Beispiele bilden die in DE 4107635 oder US 47 14 716 beschriebenen Produkte.

Mit besonderem Vorteil stellen die Propylen-Homopolymere und/oder Propylen-Copolymere der erfindungsgemäßen thermoplastischen Elastomere ein Mehrkomponentengemisch aus weitgehend isotaktischen Propylen-Homopolymeren und/oder Copolymeren aus Propylen und Ethylen bzw. α-Olefinen mit 4 bis 18 C-Atomen, nichtisotaktischen Propylen-Homopolymeren, weitgehend amorphen Propylen-Homopolymeren und/oder Propylen-Copolymeren sowie nichtlinearen modifizierten Propylen-Homopolymeren und/oder Propylen-Copolymeren dar.

Durch Einsatz spezieller Mehrkomponentengemische der beschriebenen Polypropylene und Propylen-Copolymere sind spezifische Eigenschaftskombinationen der erfindungsgemäßen thermoplastischen Elastomere erzielbar.

Bevorzugt werden als Propylen-Copolymere in den erfindungsgemäßen thermoplastischen Elastomeren ebenfalls Blends aus
a) 60 bis 98 Masse% eines kristallinen Copolymeren aus 85 bis 99,5 Masse% Propylen und 15 bis 0,5 Masse% Ethylen und/oder einem α-Olefin der allgemeinen Formel CH₂=CHR, wobei R ein linearer oder verzweigter Alkylrest mit 2 bis 8 Kohlenstoffatomen ist, und
b) 2 bis 40 Masse% eines elastischen Copolymers aus 20 bis 70 Masse% Ethylen und 80 bis 30 Masse% Propylen und/oder einem α-Olefin der allgemeinen Formel CH₂=CHR, wobei R ein linearer oder verzweigter Alkylrest mit 2 bis 8 Kohlenstoffatomen ist.

Diese Polyolefinblends aus kristallinen Copolymeren und elastischen Copolymeren sind beispielsweise die in EP 400 333 oder EP 472 946 beschriebenen Polymermischungen.

Die in den erfindungsgemäßen thermoplastischen Elastomeren als Elastkomponente enthaltenen elastomeren Co- und/oder -Terpolymere sind Ethylen-Buten-Copolymere, Ethylen-Hexen-Copolymere und/oder Ethylen-Octen-Copolymere.

Beispiele für die in den Mischungen aus Propylen-Homopolymeren und/oder Propylen-Copolymeren und elastomeren C₄-C₁₂-Olefin-Co- und/oder -Terpolymeren enthaltenen C₇-C₁₆-Diallylverbindungen sind Diallyldimethylsilan, Diallyl(2-hydroxy-3-phenoxypropyl)isocyanurat, Diallylcyanurat, Diallylcyanoethylisocyanurat, Diallylcyanamid, Diallylmaleinat, Diallylmelamin, Diallylphthalat und/oder N,N'-Diallylweinsäurediamid.

Beispiele für die in den Mischungen aus Propylen-Homopolymeren und/oder Propylen-Copolymeren und elastomeren C₄-C₁₂-Olefin-Co- und/oder -Terpolymeren enthaltenen C₉- C₁₂-Triallylverbindungen sind Triallylcitrat, Triallylcyanurat, Triallylisocyanurat und Triallylphosphin.

Besonders werden für die in den Mischungen aus Propylen-Homopolymeren und/ oder Propylen-Copolymeren und elastomeren C₄-C₁₂-Olefin-Co- und/oder -Terpolymeren enthaltenen Monomere C₇-C₁₀-Divinylverbindungen bevorzugt, insbesondere Divinylanilin, m-Divinylbenzol, p-Divinylbenzol, Divinylpropan und/oder 1.3-Divinyl-1.1.3.3-tetramethyldisiloxan.

Die in den erfindungsgemäßen thermoplastischen Elastomeren enthaltenen Stabilisatoren sind bevorzugt Mischungen aus 0.01 bis 0,6 Masse% phenolischen Antioxidantien, 0,01 bis 0,6 Masse% 3-Arylbenzofuranonen, 0,01 bis 0,6 Masse% Verarbeitungsstabilisatoren auf Basis von Phosphiten , 0,01 bis 0,6 Masse% Hochtemperaturstabilisatoren auf Basis von Disulfiden und Thioäthern und/oder 0,01 bis 0,8 Masse% sterisch gehinderten Aminen (HALS).

Geeignete phenolische Antioxidantien sind 2-tert.Butyl-4,6-dimethylphenol, 2,6-Ditert.butyl-4-methylphenol, 2,6-Di-tert.butyl-4-isoamylphenol, 2,6,-Di-tert.butyl-4-ethylphenol, 2-tert.Butyl-4,6-diisopropylphenol, 2,6-Dicyclopentyl-4-methylphenol, 2,6-Di-tert.-butyl-4-methoxymethylphenol, 2-tert.Butyl-4,6-dioctadecylphenol, 2,5-Di-tert.butylhydrochinon, 2,6-Di-tert.butyl-4,4-hexadecyloxyphenol, 2,2'-Methylenbis(6-tert.butyl-4-methylphenol), 4,4'-Thio-bis-(6-tert.butyl-2-methylphenol), 3(3,5-Ditert.butyl - 4 - hydroxyphenyl)propionsäureoctadecylester, 1,3,5 - Trimethyl - 2,4,6-tris(3',5'di-tert.butyl-4-hydroxybenzyl)benzen und/oder Pentaerythritol-tetrakis[3-(3,5-di-tert.butyl-4-hydroxyphenyl)]propionat.

Als Benzofuranonderivat ist insbesondere 5,7-Di-tert.butyl-3-(3,4-di-methylphenyl)-3H-benzofuran-2-on geeignet.

Als HALS-Verbindungen sind Bis-2,2,6,6 tetramethyl-4-piperidylsebazat und/oder Poly - ([1,1,3,3,-tetramethylbutyl)-imino] - 1,3,5- triazin - 2,4,diyl)[2,2,6,6-tetramethylpiperidyl)-amino]-hexamethylen-4-(2,2,6,6-tetra-methyl)piperidyl)-imino] besonders geeignet.

Die in den erfindungsgemäßen thermoplastischen Elastomeren gegebenenfalls enthaltenen Nukleierungsmittel sind bevorzugt α-Nukleierungsmittel wie Talkum, Natriumbenzoat oder das Natriumsalz der Methylen-bis(2,4-di-tert.bu-tylphenol)-phosphorsäure oder β-Nukleierungsmittel wie Adipinsäure. Adipinsäuredianilid. Chinacridinonchinon und/oder N,N'-Dicyclododecyl-4,4-biphenyldicarboxamid.

Die in den erfindungsgemäßen thermoplastischen Elastomeren gegebenenfalls enthaltenen Füllstoffe sind bevorzugt Al₂O₃, Al(OH)₃, Bariumsulfat. Calciumcarbonat, Glaskugeln, Holzmehl, Kieselerde, Mikrohohlkugeln, Ruß, Talkum und/oder Wollastonit.

Die in den erfindungsgemäßen thermoplastischen Elastomeren gegebenenfalls enthaltenen Verstärkerstoffe sind bevorzugt Aramidfasern, Cellulosefasern, Flachs, Jute, Kenaf, Glasfasern, Glasmatten, Mikrofasern aus flüssigkristallinen Polymeren und/oder Polytetrafluorethylen-Fasern.

Als Verarbeitungshilfsmittel können in den erfindungsgemäßen thermoplastischen Elastomeren Calciumstearat, Magnesiumstearat und/oder Wachse enthalten sein.

Erfindungsgemäß sind weiterhin hochschlagzähe Polymerblends, die aus
a) 5 bis 95 Masse%, bevorzugt 10 bis 50 Masse%, an thermoplastischen Elastomeren nach einem oder mehreren der Ansprüche 1 bis 4 und
b) 95 bis 5 Masse%, bevorzugt 90 bis 50 Masse%, an
   b1) nichtmodifizierten Polyolefinen, bevorzugt an weitgehend isotaktischen Propylen-Homopolymeren, Copolymeren aus Propylen und Ethylen bzw. α-Olefinen mit 4 bis 18 C-Atomen, insbesondere statistischen Propylen-Copolymeren, Propylen-Blockcopolymeren und/oder statistischen Propylen-Blockcopolymeren; nichtisotaktischen Propylen-Homopolymeren, weitgehend amorphen Propylen-Homopolymeren und/oder Propylen-Copolymeren, nichtlinearen Propylen-Homopolymeren und/oder Propylen-Copolymeren, und/oder
   b2) Blends aus
      b2.1) 60 bis 98 Masse% eines kristallinen Copolymeren aus 85 bis 99,5 Masse% Propylen und 15 bis 0,5 Masse% Ethylen und/oder einem α-Olefin der allgemeinen Formel CH₂=CHR, wobei R ein linearer oder verzweigter Alkylrest mit 2 bis 8 Kohlenstoffatomen ist.
      b2.2) 2 bis 40 Masse% eines elastischen Copolymers aus 20 bis 70 Masse% Ethylen und 80 bis 30 Masse% Propylen und/oder einem α-Olefin der allgemeinen Formel CH₂=CHR, wobei R ein linearer oder verzweigter Alkylrest mit 2 bis 8 Kohlenstoffatomen ist,
bestehen.

Die nichtmodifizierte Polyolefinkomponente in den erfindungsgemäßen hochschlagzähen Polymerblends besteht bevorzugt aus denjenigen Propylen-Homopolymeren und/oder Propylen-Copolymeren, die ebenfalls Bestandteil der thermoplastischen Elastomere sind.

Die thermoplastischen Elastomeren guter Einfärbbarkeit und hoher Festigkeit und Elastizität, deren eingelagerte Elastomerpartikel einen mittleren Partikeldurchmesser von 0,1 bis 1 µm, haben, werden erfindungsgemäß nach einem Verfahren hergestellt, bei dem Mischungen aus 20 bis 80 Masse%, bevorzugt 40 bis 60 Masse%, Propylen-Homopolymeren und/oder Propylen-Copolymeren, 80 bis 20 Masse%, bevorzugt 60 bis 40 Masse%, Ethylen-Buten-Copolymeren, Ethylen-Hexen-Copolymeren und/oder Ethylen-Octen-Copolymeren, 0,10 bis 4,0 Masse%, bevorzugt 0,2 bis 1,5 Masse%, bezogen auf die Summe der eingesetzten Polymere, C₇- bis C₁₆-Diallylverbindungen, C₇- bis C₁₀-Divinylverbindungen und/oder C₉- bis C₁₂-Triallylverbindungen als ungesättigte Monomere und 0 bis 4,0 Masse%, bevorzugt 0,2 bis 1,5 Masse%, bezogen auf die Summe der eingesetzten Polymere, Acylperoxiden, Alkylperoxiden, Hydroperoxiden, Peroxycarbonaten, Perestem, Ketonperoxiden, Peroxiketalen und/oder Azoverbindungen als thermisch zerfallende Radikalbildner in kontinuierlichen Knetem in der Schmelze bei Massetemperaturen von 150 bis 300 °C, bevorzugt von 185 bis 245 °C, und Verweilzeiten von 1 min bis 35 min, bevorzugt 2,5 bis 6 min, umgesetzt werden, wobei vor und/oder nach der Umsetzung als Zusatzstoffe 0,01 bis 2,5 Masse% Stabilisatoren, 0,1 bis 1 Masse% Antistatika, 0,2 bis 3 Masse% Pigmente, 0,05 bis 1 Masse% Nukleierungsmittel, 5 bis 40 Masse% Füll- und/oder Verstärkerstoffe, 2 bis 20 Masse% Flammschutzmittel und/oder 0,01 bis 1 Masse% Verarbeitungshilfsmittel, jeweils bezogen auf die Summe der eingesetzten Polymere, zugesetzt werden können.

Als thermisch zerfallende Radikalbildner werden bei dem erfindungsgemäßen Verfahren zur Herstellung thermoplastischer Elastomerer Acylperoxide, Alkylperoxide, Hydroperoxide, Peroxycarbonate, Perester, Ketonperoxide, Peroxiketale und/oder Azoverbindungen eingesetzt.

Beispiele für die eingesetzten Acylperoxide sind Benzoylperoxid, Chlorbenzoylperoxid, Methoxybenzoylperoxid, Methylbenzoylperoxid, Nitrobenzoylperoxid, Acetylbenzoylperoxid, Lauroylperoxid oder Succinoylperoxid.

Beispiele für die eingesetzten Alkylperoxide sind Allyl-tert.butylperoxid, 2.2-Bis-(tert.butylperoxybutan), 1,1-Bis-(tert.butylperoxi-)-3,3,5-trimethylcyclohexan, Diisopropylaminomethyl-tert.amylperoxid, Dimethylaminomethyl-tert.amylperoxid, Diethylaminomethyl-tert.butylperoxid, Dimethylaminomethyl-tert.butylperoxid, 1,1-Di-(tert.amylperoxi)cyclohexan, tert. Amylperoxid, tert.Butylcumylperoxid, tert.Butylperoxid und 1-Hydroxybutyl-n-butylperoxid.

Beispiele für die eingesetzten Hydroperoxide sind Decalinhydroperoxid und Tetralinhydroperoxid

Beispiele für die eingesetzten Perester und Peroxicarbonate sind Butylperacetat, Cumylperacetat, Cumylperpropionat, Cyclohexylperacetet, Di-tert.butylperadipat, Ditert.butylperazelat, Di-tert.butylperglutarat, Di-tert.butylperphthalat, Di-tert.butyl-persebazat, 4-Nitrocumylperpropionat, 1-Phenylethylperbenzoat, Phenylethylnitroperbenzoat, tert.Butylbicyclo-(2.2.1)heptanpercarboxylat, tert.Butyl-4-carbomethoxyperbutyrat, tert.Butylcyclobutanpercarboxylat, tert.Butylcyclohexylperoxycarboxylat, tert.Butylcyclopentylpercarboxylat, tert.Butylcyclopropanpercarboxylat, tert.Butyldimethylpercinnamat, tert.Butyl-2-(2.2-diphenylvinyl)perbenzoat, tert.Butyl-4-methoxyperbenzoat, tert.Butylperbenzoat, tert.Butylcarboxicyclohexan, tert. Butylpernaphthoat, tert.Butylperoxiisopropylcarbonat, tert.Butylpertoluat, tert. Butyl-1-phenylcyclopropylpercarboxylat, tert. Butyl-2-propylperpenten-2-oat, tert. Butyl-1-methylcypropylpercarboxylat, tert.Butyl-4-nitrophenylperacetat, tert.Butylnitrophenylperoxycarbamat, tert.Butyl-N-succinimidopercarboxylat, tert.Butylpercrotonat, tert. Butylpermaleinsäure, tert. Butylpermethacrylat, tert.Butylperoctoat, tert. Butylperoxyisopropylcarbonat, tert.Butylperisobutyrat, tert. Butylperacrylat und tert.Butylperpropionat.

Beispiele für die eingesetzten Ketonperoxide sind Methylethylketonhydroperoxid und Diethylketonhydroperoxid.

Beispiele für die eingesetzten Peroxiketale sind 1.1-Di-tert.butylperoxy-3,3,5-trimethylcyclohexan und 1.1-Di-tert.butylperoxy-3,3,5-dimethylethylcyclohexan.

Beispiele für die eingesetzten Azoverbindungen sind 2-Cyano-2-propylazoformamid, 2,2'-Azo-bis-2-methylpropionitril, 1,1'-Azo-bis-cyclopentannitril, 1,1'-Azo.bis-cyclohexannitril, 2,2'-Azo-bis-cyclohexylpropionitril; 2,2'-Azo-bis-methyl-2-methylpropionat und Azo-bis-(N,N'-diethylenisobutyramidin).

Als kontinuierliche Kneter sind bei dem erfindungsgemäßen Verfahren zur Herstellung thermoplastischer Elastomerer insbesondere Doppelschneckenextruder, Einschneckenextruder hoher Mischwirkung oder eine Kaskade aus gekoppelten Knetkammern geeignet.

Eine bevorzugte Variante für die Dosierung der C₈-C₁₄-Diacrylate. C₇-C₁₆-Diallylverbindungen, C₉-C₁₅-Dimethacrylate, C₇-C₁₀-Divinylverbindungen, C₁₂-C₁₇-Acrylsäureester von Polyalkoholen, C₁₅-C₂₁-Methacrylsäureester von Polyalkoholen und/oder C₉- bis C₁₂-Triallylverbindungen als ungesättigte Monomere und/oder Acylperoxide, Alkylperoxide, Hydroperoxide. Peroxycarbonate, Perester, Ketonperoxide, Peroxiketale und/oder Azoverbindungen als thermisch zerfallende Radikalbildner besteht darin, daß die Dosierung in den kontinuierlichen Kneter in die Schmelze der Mischung aus Propylen-Homopolymeren und/oder Propylen-Copolymeren, elastomeren C₄-C₁₂-Olefin - Co- und/oder -Terpolymeren und gegebenenfalls Zusatzstoffen, C₈-C₁₄-Diacrylaten, C₇-C₁₆-Diallylverbindungen, C₉-C₁₅-Dimethacrylaten, C₇-C₁₀-Divinylverbindungen, C₁₂-C₁₇-Acrylsäureestern von Polyalkoholen, C₁₅-C₂₁-Methacrylsäureestern von Polyalkoholen und/oder C₉- bis C₁₂-Triallylverbindungen als ungesättigte Monomere und/oder Acylperoxiden, Alkylperoxiden, Hydroperoxiden, Peroxycarbonaten, Perestern, Ketonperoxiden, Peroxiketalen und/oder Azoverbindungen als thermisch zerfallende Radikalbildner erfolgt.

Eine weitere bevorzugte Variante des erfindungsgemäßen Verfahrens zur Herstellung thermoplastischer Elastomerer besteht darin, daß die Mischung der Propylen-Homopolymeren und/oder Propylen-Copolymeren, elastomeren C₄-C₁₂-Olefin -Cound/oder -Terpolymeren und gegebenenfalls Zusatzstoffen mit den C₈-C₁₄-Diacrylaten, C₇-C₁₆-Diallylverbindungen, C₉-C₁₅-Dimethacrylaten, C₇-C₁₀-Divinylverbindungen, C₁₂-C₁₇-Acrylsäureestern von Polyalkoholen, C₁₅-C₂₁-Methacrylsäureestern von Polyalkoholen und/oder C₉- bis C₁₂-Triallylverbindungen als ungesättigte Monomere und/oder Acylperoxiden, Alkylperoxiden, Hydroperoxiden, Peroxycarbonaten, Perestern, Ketonperoxiden, Peroxiketalen und/oder Azoverbindungen als thermisch zerfallende Radikalbildner durch Vormischung vor Dosierung der Mischungen in den kontinuierlichen Kneter erfolgt.

Bei der Vormischung oder Sorption der thermische zerfallenden Radikalbildner müssen solche Acylperoxide, Alkylperoxide, Hydroperoxide, Peroxycarbonate, Perester, Ketonperoxide, Peroxiketale und/oder Azoverbindungen eingesetzt werden, die beim Schmelzpunkt bzw. Erweichungspunkt der eingesetzten Propylen-Homopolymere und/oder Propylen-Copolymere eine Halbwertszeit über 40 s besitzen. um einen vorzeitigen Zerfall vor Homogenisierung der Mischung auszuschließen.

Die erfindungsgemäßen thermoplastischen Elastomere sowie Mischungen der thermoplastischen Elastomere mit üblichen Polyolefinen sind bevorzugt für den Einsatz in der Fahrzeugindustrie, insbesondere für Schlauchverbinder, Luftansaugkanäle, Rohrmuffen und Dichtungsprofile, in der Haushaltsgeräteindustrie, insbesondere für Verbinder und Dichtungsprofile, auf dem Bausektor, insbesondere für Fensterabdichtungen, Dichtungsprofile für Zwischenwände, Dehnungsfugen und im Installationsbereich sowie in der Medizintechnik, insbesondere für Schläuche, Dichtungen, Spritzen und Kolben, geeignet.

Von besonderem Vorteil ist, daß die thermoplastischen Elastomere auf Grund der opaken Färbung für die Herstellung eingefärbter Erzeugnisse in beliebigen Farbtönen eingefärbt werden können.

Die Erfindung wird durch nachfolgende Beispiele erläutert :

### Beispiel 1

In einen Werner&Pfleiderer-Doppelschneckenextruder ZSK 54, UD = 36, mit 2 Dosierwaagen, Dosiereinrichtung für flüssige Medien in Zone 4, Vacuumentgasung und Unterwassergranulierung, Temperaturprofil 85/175/220/185/220/225/210/ 190°C, wird ein Propylen-Ethylen-Copolymer (Ethylengehalt 3,9 Masse%, Schmelzindex 7,2 g/10 min bei 230°C/2,16 kp) mit 8,0 kg/Std. und ein Ethylen-Octen-Copolymer (Octengehalt 22 Masse%, Schmelzindex 4,5g/10 min bei 190°C/2, 16 kp) mit 12,0 kg/Std. dosiert. Die Mischung wird im Extruder aufgeschmolzen und in die Zone 4 des Extruders ein Gemisch aus 30 Masse% p-Divinylbenzol, 16 Masse% 2,5-Dimethyl-2,5-di(tert.butylperoxyhexan) und 54 Masse% Aceton mit 0,60 kg/Std. dosiert. Die Reaktionsmischung wird einer Vacuumentgasung unterzogen, ausgetragen und granuliert.

Das resultierende opake thermoplastische Elastomer hat folgende Eigenschaften :
Zugspannung[N/mm²] bei Dehnung [%] : 7,2/200; 9/400; 13.0/600:
Zugverformungsrest : 23%

### Beispiel 2 (nicht erfindungsgemäß)

In einen Werner&Pfleiderer-Doppelschneckenextruder nach Beispiel 1 wird ein Propylen-Ethylen-Copolymer nach Beispiel 1 mit 10,0 kg/Std. und ein Ethylen-Octen-Copolymer nach Beispiel 1 mit 10,0 kg/Std. dosiert. Die Mischung wird im Extruder aufgeschmolzen und in die Zone 4 des Extruders ein Gemisch aus 36 Masse% Butandioldiacrylat, 8 Masse% Dicumylperoxid und 56 Masse% Aceton mit 0,62 kg/Std. dosiert. Die Reaktionsmischung wird einer Vacuumentgasung unterzogen, ausgetragen und granuliert.

Das resultierende opake thermoplastische Elastomer hat folgende Eigenschaften :
Zugspannung[N/mm²] bei Dehnung [%] : 8,0/200; 10,0/400; 15,2/600;
Zugverformungsrest : 28%

Als Vergleich besitzt das ohne Zusatz des Gemischs aus Butandioldiacrylat, Dicumylperoxid und Aceton unter gleichen Bedingungen hergestellte thermoplastische Elastomer eine Reißfestigkeit von 8,8 N/mm² bei einer Reißdehnung von 43%.

Ein unter gleichen Versuchsbedingungen ohne Zusatz von Butandioldiacrylat hergestelltes thermoplastisches Elastomer besitzt folgende Eigenschaften :
Zugspannung[N/mm²] bei Dehnung [%] : 7,2/200; 8,0/400; 10,6/600;
Zugverformungsrest : 30% .

### Beispiel 3

In einen Werner&Pfleiderer-Doppelschneckenextruder nach Beispiel 1, Temperaturprofil 80/170/230//190/230/230/220/190°C, wird eine Polyolefinmischung, die aus 40 Masse% eines Reaktorblends (Ethylengehalt 33 Mol%, Schmelzindex 8 g/10 min bei 230°C/2.16 kg), bestehend aus einem kristallinen Propylen-Ethylen-Copolymer und einem elastischen Ethylen-Propylen-Copolymer, und 60 Masse% eines Ethylen-Octen-Copolymers nach Beispiel 1, auf die im Innenmischer 0,45 Masse% m-Divinylbenzen, 0,25 Masse% 1-Phenylethylperbenzoat, 0,20 Masse% Dicumylperoxid, 0,30 Masse% 2-tert.Butyl-4,6-diisopropylphenol, 0,15 Masse% Bis-2,2,6,6-tetramethyl-4-piperidylsebazat und 0,2 Masse% Calciumpalmitat, jeweils bezogen auf die eingesetzte Polyolefinmischung, aufgetrommelt wurde, mit 20,5 kg/Std. dosiert. Die Mischung wird im Extruder aufgeschmolzen, reaktiv kompoundiert, einer Vacuumentgasung unterzogen, ausgetragen und granuliert.

Das resultierende opake thermoplastische Elastomer hat folgende Eigenschaften :
Zugspannung[N/mm²] bei Dehnung [%] : 6,6/200; 8,9/400; 12,7/600;
Zugverformungsrest : 16,5%

Als Vergleich besitzt das ohne Zusatz von m-Divinylbenzol und thermisch zerfallenden Radikalbildnern unter gleichen Bedingungen hergestellte thermoplastische Elastomer folgende Eigenschaften :
Zugspannung[N/mm²] bei Dehnung [%] 2,8/200; 3,0/400; 3,6/600;
Zugverformungsrest : 23,8%

Ein unter gleichen Versuchsbedingungen ohne Zusatz von m-Divinylbenzol hergestelltes thermoplastisches Elastomer besitzt folgende Eigenschaften :
Zugspannung[N/mm²] bei Dehnung [%] : 5,0/200; 6,5/400; 7,7/600;
Zugverformungsrest : 21,2% .

### Beispiel 4

In einen Werner&Pfleiderer-Doppelschneckenextruder nach Beispiel 1 wird eine Polyolefinmischung aus 35 Masse% des Reaktorblends nach Beispiel 3. 5 Masse% eines nichtlinearen modifizierten Propylen-Homopolymers (Schmelzindex 1,4 g/10 min bei 230°C/2.16 kp, Gehalt an gebundenem Butadien 0.5 Masse%, Grenzviscosität des nichtlinearen modifizierten Propylen-Homopolymers/Grenzviscosität des nichtmodifizierten Propylen-Homopolymers 0,78) und 60 Masse% des Ethylen-Octen-Copolymers nach Beispiel 1, auf die im Innenmischer 0,35 Masse% Diallylmaleinat, 0,25 Masse% tert.Butylpertoluat, 0,20 Masse% tert.Butylcumylperoxid, 0,15 Masse% 2-tert.Butyl-4,6-diisopropylphenol, 0,15 Masse% Bis-2,2,6,6-tetramethyl-4-piperidylsebazat und 0,2 Masse% Calciumpalmitat, jeweils bezogen auf die eingesetzte Polyolefinmischung, aufgetrommelt wurde, mit 22 kg/Std. dosiert. Die Mischung wird im Extruder aufgeschmolzen, reaktiv kompoundiert, einer Vacuumentgasung unterzogen, ausgetragen und granuliert.

Das resultierende opake thermoplastische Elastomer hat folgende Eigenschaften :
Zugspannung[N/mm²] bei Dehnung [%] : 6,7/200; 8,2/400; 11.0/600;
Zugverformungsrest : 15,45%

Als Vergleich besitzt das ohne Zusatz von Diallylmaleinat und thermisch zerfallenden Radikalbildnern unter gleichen Bedingungen hergestellte thermoplastische Elastomer folgende Eigenschaften :
Zugspannung[N/mm²] bei Dehnung [%]: 3,2/200; 3,4/400; 3,6/600;
Zugverformungsrest : 23,5%

Ein unter gleichen Versuchsbedingungen ohne Zusatz von Diallylmaleinat hergestelltes thermoplastisches Elastomer besitzt folgende Eigenschaften :
Zugspannung[N/mm²] bei Dehnung [%] : 4,6/200; 5,8/400; 6,7/600;
Zugverformungsrest : 22,1% .

### Beispiel 5 (nicht erfindungsgemäß)

In einem Berstorff-Doppelschneckenextruder Z 25 wird eine Polymermischung aus 70 Masse% eines Polypropylen-Homopolymers (Schmelzindex 1,9 g/10 min bei 230°C/2,16 kp) und 30 Masse% des thermoplastischen Elastomers nach Beispiel 2 bei 250 U/min, einem Durchsatz von 5 kg/h und einem Temperaturprofil von 25/215/215/215/215/215/215/ 220°C aufgeschmolzen, homogenisiert, ausgetragen und granuliert.

Das resultierende schlagzäh modifizierte Polypropylen besitzt folgende Eigenschaften :
Zugspannung[N/mm²] bei Dehnung [%] : 20,2/200, 21,0/400, 22,3/600
Kerbschlagzähigkeit nach Charpy [kJ/m²] bei [°C]: 41/20, 4,7/-20, 2,3/-40

Als Vergleich besitzt ein unter gleichen Homogenisierungsbedingungen hergestelltes schlagzäh modifiziertes Polypropylen, das aus 70 Masse% des Polypropylen-Homopolymers und 30 Masse% der entsprechenden nichtmodifizierten Propylenpolymer/Elastomer-Mischung nach Beispiel 2 hergestellt wurde, folgende Eigenschaften :
Zugspannung[N/mm²] bei Dehnung [%]: 19,4/200, 20,0/400, 22,7/600
Kerbschlagzähigkeit nach Charpy [kJ/m²] bei [°C]: 10,5/20, 3,2/-20, 2,0/-40

## Patentansprüche

1. Thermoplastische Elastomere guter Einfärbbarkeit und hoher Festigkeit und Elastizität, deren eingelagerte Elastomerpartikel einen mittleren Partikeldurchmesser von 0,1 bis 1 µm, haben, aus Propylen-Homopolymeren und/oder Propylen-Copolymeren, Elastomeren, ungesättigten Monomeren, gegebenenfalls thermisch zerfallenden Radikalbildnern und Hilfsstoffen, **dadurch gekennzeichnet, dass** die thermoplastischen Elastomere nach einem Verfahren hergestellt worden sind, bei dem Mischungen aus 20 bis 80 Masse%, bevorzugt 40 bis 60 Masse%, Propylen-Homopolymeren und/oder Propylen-Copolymeren, 80 bis 20 Masse%, bevorzugt 60 bis 40 Masse%, Ethylen-Buten-Copolymeren, Ethylen-Hexen-Copolymeren und/oder Ethylen-Octen-Copolymeren, 0,10 bis 4,0 Masse%, bevorzugt 0,2 bis 1,5 Masse%, bezogen auf die Summe der eingesetzten Polymere, C₇-C₁₆-Diallylverbindungen, C₇-C₁₀-Divinylverbindungen und/oder C₉-C₁₂-Triallylverbindungen als ungesättigte Monomere und 0 bis 4,0 Masse%, bevorzugt 0,2 bis 1,5 Masse%, bezogen auf die Summe der eingesetzten Polymere, Acylperoxiden, Alkylperoxiden, Hydroperoxiden, Peroxycarbonaten, Perestern, Ketonperoxiden, Peroxiketalen und/oder Azoverbindungen als thermisch zerfallende Radikalbildner in der Schmelze umgesetzt worden sind, wobei vor und/oder nach der Umsetzung als Zusatzstoffe 0,01 bis 2,5 Masse% Stabilisatoren, 0,1 bis 1 Masse% Antistatika, 0,2 bis 3 Masse% Pigmente, 0,05 bis 1 Masse% Nukleierungsmittel, 5 bis 40 Masse% Füll- und/oder Verstärkerstoffe, 2 bis 20 Masse% Flammschutzmittel und/oder 0,01 bis 1 Masse% Verarbeitungshilfsmittel, jeweils bezogen auf die Summe der eingesetzten Polymere, zugesetzt werden können.

2. Thermoplastische Elastomere nach Anspruch 1, **dadurch gekennzeichnet, dass** die als Propylen-Homopolymere und/oder Propylen-Copolymere eingesetzten Polypropylene,
a) weitgehend isotaktische Propylen-Homopolymere, die bevorzugt unter Anwendung von Ziegler-Natta-Katalysatoren oder Metallocenkatalysatoren hergestellt worden sind, oder
b) Copolymere aus Propylen und Ethylen bzw. α-Olefinen mit 4 bis 18 C-Atomen, bevorzugt statistische Propylen-Copolymere, Propylen-Blockcopolymere und/oder statistische Propylen-Blockcopolymere oder
c) Mischungen aus 50 bis 98 Masse% der Polymeren a) und/oder b) und 2 bis 50 Masse%
von
c1) nichtisotaktischen Propylen-Homopolymeren mit einem Schmelzpunkt von 145 bis 165 °C, einer Schmelzviscosität von 200000 bis 2000000 cps bei 190 °C, einer Kristallisationswärme von 4 bis 10 cal/g und einem löslichen Anteil in Diethylether von 35 Masse% bis 55 Masse%;
c2) weitgehend amorphen Propylen-Homopolymere oder Propylen-Copolymeren mit einem Anteil an kristallinem Propylen-Homopolymer bzw. kristallinem Propylen-Copolymer unter 10 Masse%, einer Schmelzenthalpie unter 40 J/g und einem Schmelzindex von 0,1 bis 100 g/10 min bei 230 °C/2, 16 kg, wobei das weitgehend amorphe Polypropylen ein Homopolymer des Propylens und/oder ein Copolymer des Propylens aus mindestens 80 Mol % Propylen und höchstens 20 Mol % eines oder mehrerer α-Olefine der allgemeinen Formel CH₂=CHR ist, wobei R ein linearer oder verzweigter Alkylrest mit 2 bis 8 Kohlenstoffatomen ist:
und/oder
c3) nichtlineare modifizierte Propylen-Homopolymere und/oder Propylen-Copolymere mit Schmelzindices von 0,1 bis 30 g/10 min bei 230 °C/2, 16 kg und einem Quotienten aus der Grenzviscosität des nichtlinearen modifizierten Propylen-Homopolymeren und/oder Propylen-Copolymeren und der Grenzviscosität des linearen Propylen-Homopolymeren und/oder Propylen-Copolymeren mit weitgehend gleichem Molmassen-Gewichtsmittel von 0,20 bis 0,99;
oder
d) Mischungen der Polymere a) bis c) sind.

3. Thermoplastische Elastomere nach Anspruch 1, **dadurch gekennzeichnet, dass** die Propylen-Copolymere aus einem Blend aus
a) 60 bis 98 Masse% eines kristallinen Copolymeren aus 85 bis 99,5 Masse% Propylen und 15 bis 0,5 Masse% Ethylen und/oder einem α-Olefin der allgemeinen Formel CH₂=CHR, wobei R ein linearer oder verzweigter Alkylrest mit 2 bis 8 Kohlenstoffatomen ist,
b) 2 bis 40 Masse% eines elastischen Copolymers aus 20 bis 70 Masse% Ethylen und 80 bis 30 Masse% Propylen und/oder einem α-Olefin der allgemeinen Formel CH₂=CHR, wobei R ein linearer oder verzweigter Alkylrest mit 2 bis 8 Kohlenstoffatomen ist,
bestehen.

4. Thermoplastische Elastomere nach einem oder mehreren der Ansprüche 1 bis 3, **dadurch gekennzeichnet, dass** die C₇-C₁₀-Divinylverbindungen Divinylanilin, m-Divinylbenzol, p-Divinylbenzol, Divinylpropan und/oder 1,3-Divinyl-1,1,3,3-tetramethyldisiloxan sind.

5. Hochschlagzähe Polymerblends aus
a) 5 bis 95 Masse%, bevorzugt 10 bis 50 Masse%, an thermoplastischen Elastomeren nach einem oder mehreren der Ansprüche 1 bis 4, und
b) 95 bis 5 Masse%, bevorzugt 90 bis 50 Masse%, an
b1) nichtmodifizierten Polyolefinen, bevorzugt an weitgehend isotaktischen Propylen-Homopolymeren, Copolymeren aus Propylen und Ethylen bzw. α-Olefinen mit 4 bis 18 C-Atomen - insbesondere statistischen Propylen-Copolymeren, Propylen-Blockcopolymeren und/oder statistischen Propylen-Blockcopolymeren - , nichtisotaktischen Propylen-Homopolymeren, weitgehend amorphen Polypropylenen, nichtlinearen Propylenpolymeren und/oder
b2) Blends aus
b2.1) 60 bis 98 Masse% eines kristallinen Copolymeren aus 85 bis 99,5 Masse% Propylen und 15 bis 0,5 Masse% Ethylen und/oder einem α-Olefin der allgemeinen Formel CH₂=CHR, wobei R ein linearer oder verzweigter Alkylrest mit 2 bis 8 Kohlenstoffatomen ist,
b2.2) 2 bis 40 Masse% eines elastischen Copolymers aus 20 bis 70 Masse% Ethylen und 80 bis 30 Masse% Propylen und/oder einem α-Olefin der allgemeinen Formel CH₂=CHR, wobei R ein linearer oder verzweigter Alkylrest mit 2 bis 8 Kohlenstoffatomen ist.

6. Verfahren zur Herstellung thermoplastischer Elastomerer guter Einfärbbarkeit und hoher Festigkeit und Elastizität, deren eingelagerte Elastomerpartikel einen mittleren Partikeldurchmesser von 0,1 bis 1 µm, haben, **dadurch gekennzeichnet, dass** Mischungen aus 20 bis 80 Masse%, bevorzugt 40 bis 60 Masse%, Propylen-Homopolymeren und/oder Propylen-Copolymeren, 80 bis 20 Masse%, bevorzugt 60 bis 40 Masse%, Ethylen-Buten-Copolymeren, Ethylen-Hexen-Copolymeren und/oder Ethylen-Octen-Copolymeren, 0,10 bis 4,0 Masse%, bevorzugt 0,2 bis 1,5 Masse%, bezogen auf die Summe der eingesetzten Polymere, C₇₋ bis C₁₆-Diallylverbindungen, C₇- bis C₁₀-Divinylverbindungen, und/oder C₉- bis C₁₂- Triallylverbindungen als ungesättigte Monomere und 0 bis 4,0 Masse%, bevorzugt 0,2 bis 1,5 Masse%, bezogen auf die Summe der eingesetzten Polymere, Acylperoxiden, Alkylperoxiden, Hydroperoxiden, Peroxycarbonaten, Perestern, Ketonperoxiden, Peroxiketalen und/oder Azoverbindungen als thermisch zerfallende Radikalbildner in kontinuierlichen Knetern in der Schmelze bei Massetemperaturen von 150 bis 300 °C, bevorzugt von 185 bis 245 °C, und Verweilzeiten von 1 min bis 35 min, bevorzugt 2,5 bis 6 min, umgesetzt werden, wobei vor und/oder nach der Umsetzung als Zusatzstoffe 0,01 bis 2,5 Masse% Stabilisatoren, 0,1 bis 1 Masse% Antistatika, 0,2 bis 3 Masse% Pigmente, 0,05 bis 1 Masse% Nukleierungsmittel, 5 bis 40 Masse% Füll- und/oder Verstärkerstoffe, 2 bis 20 Masse% Flammschutzmittel und/oder 0,01 bis 1 Masse% Verarbeitungshilfsmittel, jeweils bezogen auf die Summe der eingesetzten Polymere, zugesetzt werden können.

7. Verfahren zur Herstellung thermoplastischer Elastomerer nach Anspruch 6, **dadurch gekennzeichnet, dass** die C₇-C₁₆-Diallylverbindungen, C₇-C₁₀-Divinylverbindungen und/oder C₉- bis C₁₂-Triallylverbindungen als ungesättigte Monomere und/oder Acylperoxide, Alkylperoxide, Hydroperoxide, Peroxycarbonate, Perester, Ketonperoxide, Peroxiketale und/oder Azoverbindungen als thermisch zerfallende Radikalbildner im kontinuierlichen Kneter in die Schmelze der Mischung aus Propylen-Homopolymeren und/oder Propylen-Copolymeren, Ethylen-Buten-Copolymeren, Ethylen-Hexen-Copolymeren und/oder Ethylen-Octen-Copolymeren, und gegebenenfalls Zusatzstoffen, C₇-C₁₆-Diallylverbindungen, C₇-C₁₀-Divinylverbindungen und/oder C₉- bis C₁₂-Triallylverbindungen als ungesättigte Monomere und/oder Acylperoxiden, Alkylperoxiden, Hydroperoxide, Peroxycarbonaten, Perestern, Ketonperoxide, Peroxiketalen und/oder Azoverbindungen als thermisch zerfallende Radikalbildner dosiert werden.

8. Verfahren zur Herstellung thermoplastischer Elastomerer nach Anspruch 6, **dadurch gekennzeichnet, dass** die Mischung der Propylen-Homopolymeren und/oder Propylen-Copolymeren, Ethylen-Buten-Copolymeren, Ethylen-Hexen-Copolymeren und/oder Ethylen-Octen-Copolymeren, und gegebenenfalls Zusatzstoffen mit den C₇-C₁₆-Diallylverbindungen, C₇-C₁₀-Divinylverbindungen, und/oder C₉- bis C₁₂-Triallylverbindungen als ungesättigte Monomere und/oder Acylperoxiden, Alkylperoxiden, Hydroperoxiden, Peroxycarbonaten, Perestern, Ketonperoxiden, Peroxiketalen und/oder Azoverbindungen als thermisch zerfallende Radikalbildner durch Vormischung vor Dosierung der Mischungen in den kontinuierlichen Kneter erfolgt.

9. Verwendung von thermoplastischen Elastomeren nach einem oder mehreren der Ansprüche 1 bis 5 sowie von Mischungen der thermoplastischen Elastomeren mit üblichen Polyolefinen in der Fahrzeugindustrie, bevorzugt für Schlauchverbinder, Luftansaugkanäle, Rohrmuffen und Dichtungsprofile, in der Haushaltsgeräteindustrie, bevorzugt für Verbinder und Dichtungsprofile, auf dem Bausektor, bevorzugt für Fensterabdichtungen, Dichtungsprofile für Zwischenwände, Dehnungsfugen und im Installationsbereich sowie in der Medizintechnik, bevorzugt für Schläuche, Dichtungen, Spritzen und Kolben.

## Claims

1. Thermoplastic elastomers with good paintability, high resistance and elasticity, the incorporated elastomer particles of which having a mean particle diameter of 0.1 to 1 µm, consisting of propylene homopolymers and/or propylene copolymers, elastomers, unsaturated monomers, and optionally of thermally degrading radical-forming agents and auxiliary agents, **characterized in that** said thermoplastic elastomers were produced according to a method in which mixtures of 20 to 80 percent by weight, preferably 40 to 60 percent by weight, of propylene homopolymers and/or propylene copolymers, 80 to 20 percent by weight, preferably 60 to 40 percent by weight, of ethylene-butene copolymers, ethylene-hexene copolymers and/or ethylene-octene copolymers, 0.10 to 4.0 percent by weight, preferably 0.2 to 1.5 percent by weight, in relation to the sum total of the polymers used, of C₇-C₁₆ diallyl compounds, C₇-C₁₀ divinyl compounds and/or C₉-C₁₂ triallyl compounds as unsaturated monomers, and 0 to 4.0 percent by weight, preferably 0.2 to 1.5 percent by weight, in relation to the sum total of the polymers used, of acyl peroxides, alkyl peroxides, hydroperoxides, peroxycarbonates, peresters, ketone, peroxides, peroxyketals, and/or azo compounds as thermally degrading radical forming agents were reacted in the melt, and wherein 0.01 to 2.5 percent by weight of stabilizers, 0.1 to 1 percent by weight of antistatics, 0.2 to 3 percent by weight of pigments, 0.05 to 1 percent by weight of nucleating agents, 5 to 40 percent by weight of fillers and/or reinforcing agents, 2 to 20 percent by weight of flame retardants and/or 0.01 to 1 percent by weight of processing auxiliaries, each in relation to the sum total of polymers used, may be added prior to and/or after the reaction.

2. Thermoplastic elastomers according to claim 1, **characterized in that** the polypropylenes used as propylene homopolymers and/or propylene copolymers,
a) are mainly isotactic propylene homopolymers that were preferably produced using Ziegler-Natta catalysts or metallocene catalysts, or
b) copolymers of propylene and ethylene or α-olefins having 4 to 18 C atoms, preferably statistical propylene copolymers, propylene block copolymers and/or statistical propylene block copolymers, or
c) mixtures of 50 to 98 percent by weight of polymers
a) and/or b) and 2 to 50 percent by weight of
c1) non-isotactic propylene homopolymers with melting points in the range from 145°C to 165°C, melt viscosities in the range from 200,000 to 2,000,000 cps at 190°C, latent heat of solidification values from 4 to 10 cal/g and a soluble portion in diethyl ether from 35 percent by weight to 55 percent by weight;
c2) mostly amorphous propylene homopolymers or propylene copolymers with a portion of crystalline propylene homopolymers or crystalline propylene copolymers of less than 10 percent by weight, a melting enthalpy of less than 40 J/g and a melt index in the range from 0.1 to 100 g/10 min at 230°C/2.16 kg, said mostly amorphous polypropylene being a homopolymer of propylene and/or a copolymer of propylene containing at least 80 mole percent of propylene and a maximum of 20 mol percent of one or several α-olefins of the general formula CH₂=CHR wherein R is linear or branched alkyl residue containing 2 to 8 carbon atoms; and/or
c3) non-linear modified propylene homopolymers and/or propylene copolymers with melt-flow indices from 0.1 to 30 g/10 min at 230°C/2.16 kg and quotients of the intrinsic viscosity of the non-linear modified propylene homopolymer and/or propylene copolymer and the intrinsic viscosity of the linear propylene homopolymer and/or propylene copolymer with a generally similar molar weight average in the range from 0.20 to 0.99;
or
d) mixtures of polymers a) through c).

3. Thermoplastic elastomers according to claim 1, **characterized in that** the propylene copolymers consist of a blend of
a) 60 to 98 percent by weight of a crystalline copolymer comprising 85 to 99.5 percent by weight of propylene and 15 to 0.5 percent by weight of ethylene and/or an α-olefin of the general formula CH₂=CHR wherein R is a linear or branched alkyl residue containing 2 to 8 carbon atoms,
b) 2 to 40 percent by weight of an elastic copolymer comprising 20 to 70 percent by weight of ethylene and 80 to 30 percent by weight of propylene and/or an α-olefin of the general formula CH₂=CHR wherein R is a linear or branched alkyl residue containing 2 to 8 carbon atoms.

4. Thermoplastic elastomers according to one or several of claims 1 through 3 wherein the C₇-C₁₀ divinyl compounds are divinyl aniline, m-divinyl benzene, p-divinyl benzene, divinyl propane and/or 1,3-divinyl-1,1,3,3-tetramethyl disiloxane.

5. High-impact polymer blends consisting of
a) 5 to 95 percent by weight, preferably 10 to 50 percent by weight, of thermoplastic elastomers according to one or several of claims 1 through 4 and
b) 95 to 5 percent by weight, preferably 90 to 50 percent by weight, of
b1) non-modified polyolefins, preferably of mostly isotactic propylene homopolymers, copolymers of propylene and ethylene or α-olefins with 4 to 18 C atoms - in particular statistical propylene copolymers, propylene block copolymers and/or statistical propylene block copolymers, non-isotactic propylene homopolymers, mostly amorphous polypropylenes, non-linear propylene polymers and/or
b2) blends of
b2.1) 60 to 98 percent by weight of a crystalline copolymer comprising 85 to 99.5 percent by weight of propylene and 15 to 0.5 percent by weight of ethylene and/or an α-olefin of the general formula CH₂=CHR wherein R is a linear or branched alkyl residue containing 2 to 8 carbon atoms,
b2.2) 2 to 40 percent by weight of an elastic copolymer comprising 20 to 70 percent by weight of ethylene and 80 to 30 percent by weight of propylene and/or an α-olefin of the general formula CH₂=CHR wherein R is a linear or branched alkyl residue containing 2 to 8 carbon atoms.

6. A method for producing thermoplastic elastomers of good paintability, high resistance and elasticity, the incorporated elastomer particles of which having a mean particle diameter of 0.1 to 1 µm, **characterized in that** mixtures of 20 to 80 percent by weight, preferably 40 to 60 percent by weight, of propylene homopolymers and/or propylene copolymers, 80 to 20 percent by weight, preferably 60 to 40 percent by weight, of ethylene-butene copolymers, ethylene-hexene copolymers and/or ethylene-octene copolymers, 0.10 to 4.0 percent by weight, preferably 0.2 to 1.5 percent by weight, in relation to the sum total of the polymers used, of C₇-C₁₆ diallyl compounds, C₇-C₁₀ divinyl compounds and/or C₉-C₁₂ triallyl compounds as unsaturated monomers, and 0 to 4.0 percent by weight, preferably 0.2 to 1.5 percent by weight, in relation to the sum total of the polymers used, of acyl peroxides, alkyl peroxides, hydroperoxides, peroxycarbonates, peresters, ketone peroxides, peroxyketals, and/or azo compounds as thermally degrading radical forming agents are reacted in the melt at melt temperatures in the range from 150°C to 300°C, preferably from 185°C to 245°C and dwell times from 1 minute to 35 minutes, preferably from 2.5 to 6 minutes using continuous kneaders, and wherein 0.01 to 2.5 percent by weight of stabilizers, 0.1 to 1 percent by weight of antistatics, 0.2 to 3 percent by weight of pigments, 0.05 to 1 percent by weight of nucleating agents, 5 to 40 percent by weight of fillers and/or reinforcing agents, 2 to 20 percent by weight of flame retardants and/or 0.01 to 1 percent by weight of processing auxiliaries, each in relation to the sum total of polymers used, may be added prior to and/or after the reaction.

7. The method for producing thermoplastic elastomers according to claim 6, **characterized in that** the C₇-C₁₆ diallyl compounds, C₇-C₁₀ divinyl compounds and/or C₉-to C₁₂ triallyl compounds as unsaturated monomers and/or acyl peroxides, alkyl peroxides, hydroperoxides, peroxycarbonates, peresters, ketone, peroxides, peroxyketals, and/or azo compounds as thermally degrading radical forming agents are proportioned in a continuous kneader into the melted mixture of propylene homopolymers and/or propylene copolymers, ethylene-butene copolymers, ethylene-hexene copolymers and/or ethylene-octene copolymers, and optional additives, C₇-C₁₆ diallyl compounds, C₇-C₁₀ divinyl compounds and/or C₉- to C₁₂ triallyl compounds as unsaturated monomers and/or acyl peroxides, alkyl peroxides, hydroperoxides, peroxycarbonates, peresters ketone peroxides, peroxyketals, and/or azo compounds as thermally degrading radical forming agents.

8. The method for producing thermoplastic elastomers according to claim 6, **characterized in that** the propylene homopolymers and/or propylene copolymers, ethylene-butene copolymers, ethylene-hexene copolymers and/or ethylene-octene copolymers, and optional additives are intermixed with the C₇-C₁₆ diallyl compounds, C₇-C₁₀ divinyl compounds and/or C₉- to C₁₂ triallyl compounds as unsaturated monomers and/or acyl peroxides, alkyl peroxides, hydroperoxides, peroxycarbonates, peresters, ketone peroxides, peroxyketals, and/or azo compounds as thermally degrading radical forming agents by premixing before proportioning these mixtures into the continuous kneader.

9. Use of the thermoplastic elastomers according to one or several of claims 1 through 5 and of mixtures of the thermoplastic elastomers with common polyolefins in the automobile industry, preferably for hose connectors, air intake ducts, connecting sleeves and profiled joints, in the appliances industry, preferably for connectors and profiled joints, in construction, preferably for window seals, profiled joints for partition walls, expansion joints und in plumbing and medical engineering, preferably for hoses, seals, syringes and flasks.

## Revendications

1. Elastomères thermoplastiques avec une bonne affinité pour les colorants et une grande résistance et élasticité ayant des particules élastomères incorporées d'une granulométrie moyenne de 0,1 µm à 1 µm et qui sont réalisées à partir d'homopolymères de propylène et/ou de copolymères de propylène, d'élastomères, de monomères insaturés et éventuellement de formateurs de radicaux à décomposition thermique et d'adjuvants, **caractérisés en ce que** l'on a préparé les élastomères thermoplastiques selon un procédé dans lequel on a fait réagir, dans le milieu fondu, des mélanges de 20% à 80% en masse, de préférence de 40% à 60% en masse, d'homopolymères de propylène et/ou de copolymères de propylène, de 80% à 20% en masse, de préférence de 60% à 40% en masse, de copolymères d'éthylène/butène, de copolymères d'éthylène/hexène et/ou de copolymères éthylène/octène, de 0,10% à 4,0% en masse, de préférence de 0,2% à 1,5% en masse par rapport à la somme des polymères mis en oeuvre, de composés de diallyle en C₇ à C₁₆, de composés de divinyle en C₇ à C₁₀ et/ou de composés de triallyle en C₉ à C₁₂ en tant que monomères insaturés, et, de 0 à 4,0% en masse, de préférence de 0,2% à 1,5% en masse par rapport à la somme des polymères mis en oeuvre, de peroxydes d'acyle, de peroxydes d'alkyle, d'hydroperoxydes, de peroxycarbonates, de peresters, de peroxydes de cétone, de peroxycétales et/ou de composés azoïques en tant que formateurs de radicaux à décomposition thermique, où l'on peut ajouter, avant et/ou après la réaction, en tant qu'adjuvants de 0,01% à 2,5% en masse de stabilisants, de 0,1% à 1% en masse d'agents antistatiques, de 0,2% à 3% en masse de pigments, de 0,05% à 1% en masse d'agents de nucléation, de 5% à 40% en masse de charges et/ou d'agents de renforcement, de 2% à 20% en masse d'agents ignifuges et/ou de 0,01% à 1% en masse d'agents auxiliaires, à chaque fois par rapport à la somme des polymères mis en oeuvre.

2. Elastomères thermoplastiques selon la revendication 1, **caractérisés en ce que** les polypropylènes mis en oeuvre en tant qu'homopolymères de propylène et/ou de copolymères propylène sont
a) des homopolymères de propylène qui sont substantiellement isotactiques que l'on a préparés, de préférence, en mettant en oeuvre des catalyseurs Ziegler-Natta ou des catalyseurs métallocène, ou
b) des copolymères réalisés à partir d'une part de propylène et d'autre part d'éthylène ou de α-oléfines possédant 4 à 18 atomes de C, de préférence des copolymères de propylène statistiques, des copolymères de propylène séquencés et/ou des copolymères de propylène séquencés statistiques, ou
c) des mélanges de 50% à 98% en masse de polymère a) et/ou de 2% à 50% en masse de polymère b),
c1) des homopolymères de propylène non isotactiques présentant un point de fusion de 145°C à 165°C, une viscosité de fusion, à une température de 190°C, de 200 000 à 2 000 000 cps, une chaleur latente de cristallisation de 4 cal/g à 10 cal/g et une proportion soluble dans l'éther diéthylique de 35% en masse à 55% en masse ;
c2) des homopolymères de propylène amorphes ou des copolymères de propylène substantiellement présentant une proportion en homopolymère de propylène cristallin ou en copolymère de propylène cristallin de moins de 10% en masse, une enthalpie de fusion inférieure à 40 J/g et un indice de fusion de 0,1 g à 100 g/10 min à 230°C/2,16 kg, où le polypropylène substantiellement amorphe est un homopolymère du propylène et/ou un copolymère du propylène à partir de propylène à raison d'au moins 80% en moles et, à raison d'au plus 20% en moles, d'une ou de plusieurs α-oléfines de formule générale CH₂=CHR, dans laquelle R représente un reste alkyle linéaire ou ramifié possédant 2 à 8 atomes de carbone ;
et/ou
c3) des homopolymères de propylène modifiés et/ou des copolymères de propylène non linéaires présentant un indice de fusion de 0,1 g à 30 g/10 min à 230°C/2,16 kg et un quotient de la viscosité limite de l'homopolymère de propylène et/ou de copolymère propylène modifié non linéaire et de la viscosité limite de l'homopolymère de propylène et/ou copolymère de propylène linéaire, présentant substantiellement la même moyenne en masse de la masse molaire de 0,20 à 0,99 ;
ou
d) des mélanges des polymères a) à c).

3. Elastomères thermoplastiques selon la revendication 1, **caractérisés en ce que** les copolymères de propylène sont constitués d'un mélange
a) de 60% à 98% en masse d'un copolymère cristallin, à partir de 85% à 99,5% en masse de propylène et, de 15% à 0,5% en masse d'éthylène et/ou d'une α-oléfine de formule générale CH₂=CHR dans laquelle R représente un reste alkyle linéaire ou ramifié possédant 2 à 8 atomes de carbone,
b) de 2% à 40% en masse d'un copolymère élastique, à partir de 20% à 70% en masse d'éthylène et, de 80% à 30% en masse de propylène et/ou d'une α-oléfine de formule générale CH₂=CHR dans laquelle R représente un reste alkyle ramifié ou linéaire possédant 2 à 8 atomes de carbone.

4. Elastomères thermoplastiques selon une ou plusieurs des revendications 1 à 3, **caractérisés en ce que** les composés de divinyle en C₇ à C₁₀ sont la divinylaniline, le m-divinylbenzène, le p-divinylbenzène, le divinylpropane et/ou le 1,3-divinyl-1,1,3,3-tétraméthyldisiloxane.

5. Mélanges de polymères résistants à l'impact, à partir,
a) de 5% à 95% en masse, de préférence de 10% à 50% en masse, d'élastomères thermoplastiques selon une ou plusieurs des revendications 1 à 4, et
b) de 95% à 5% en masse, de préférence de 90% à 50% en masse,
b1) de polyoléfines non modifiées, de préférence d'homopolymères de propylène substantiellement isotactiques, de copolymères à partir de propylène et d'éthylène ou de α-oléfines possédant 4 à 18 atomes de C - en particulier des copolymères de propylène statistiques, des copolymères de propylène séquencés et/ou des copolymères de propylène statistiques séquencés -, d'homopolymères de propylène non isotactiques, de polypropylènes substantiellement amorphes, de polymères de propylène non linéaires et/ou
b2) de mélanges à partir
b2.1) de 60% à 98% en masse d'un copolymère cristallin qui est réalisé à partir de 85% à 99,5% en masse de propylène et de 15% à 0,5% en masse d'éthylène et/ou d'une α-oléfine de formule générale CH₂=CHR dans laquelle R représente un reste alkyle linéaire ou ramifié possédant 2 à 8 atomes de carbone,
b2.2) de 2% à 40% en masse d'un copolymère élastique qui est réalisé à partir de 20% à 70% en masse d'éthylène et de 80% à 30% en masse de propylène et/ou d'une α-oléfine de formule générale CH₂=CHR dans laquelle R représente un reste alkyle linéaire ou ramifié possédant 2 à 8 atomes de carbone.

6. Procédé pour la préparation d'élastomères thermoplastiques avec une bonne affinité pour les colorants et une grande résistance et élasticité ayant des particules élastomères incorporées d'une granulométrie moyenne de 0,1 µm à 1 µm, **caractérisé en ce** l'on que fait réagir, dans le milieu fondu, des mélanges de 20% à 80% en masse, de préférence de 40% à 60% en masse d'homopolymères de propylène et/ou de copolymères de propylène, de 80% à 20% en masse, de préférence de 60% à 40% en masse de copolymères d'éthylène/butène, de copolymères d'éthylène/hexène et/ou de copolymères d'éthylène/octène, de 0,10% à 4,0% en masse, de préférence de 0,2% à 1,5% en masse par rapport à la somme des polymères mis en oeuvre, de composés de diallyle en C₇ à C₁₆, de composés de divinyle en C₇ à C₁₀ et/ou de composés de triallyle en C₉ à C₁₂ en tant que monomères insaturés, et, de 0 à 4,0% en masse, de préférence de 0,2% à 1,5% en masse par rapport à la somme des polymères mis en oeuvre, de peroxydes d'acyle, de peroxydes d'alkyle, d'hydroperoxydes, de peroxycarbonates, de peresters, de peroxydes de cétone, de peroxycétales et/ou de composés azoïques en tant que formateurs de radicaux à décomposition thermique, réaction que l'on réalise dans une malaxeuse en continu à une température de masse comprise de 150°C à 300°C, de préférence de 185°C à 245°C, et avec un temps de séjour de 1 minute à 35 minutes, de préférence de 2,5 minutes à 6 minutes, où l'on peut ajouter, avant et/ou après la réaction, en tant qu'adjuvants, de 0,01 % à 2,5% en masse de stabilisants, de 0,1 % à 1 % en masse d'agents antistatiques, de 0,2% à 3% en masse de pigments, de 0,05% à 1% en masse d'agents de nucléation, de 5% à 40% en masse de charges et/ou d'agents de renforcement, de 2% à 20% en masse d'agents ignifuges et/ou de 0,01% à 1% en masse d'agents auxiliaires, à chaque fois par rapport à la somme des polymères mis en oeuvre.

7. Procédé pour la préparation d'élastomères thermoplastiques selon la revendication 6, **caractérisé en ce que** l'on dose, en tant que monomères insaturés, les composés de diallyle en C₇ à C₁₆, les composés de divinyle en C₇ à C₁₀ et/ou les composés de triallyle en C₉ à C₁₂ et/ou, en tant que formateurs de radicaux à décomposition thermique, les peroxydes d'acyle, les peroxydes d'alkyle, les hydroperoxydes, les peroxycarbonates, les peresters, les peroxydes de cétone, les peroxycétales et/ou les composés azoïques, dans la malaxeuse en continu et dans le milieu fondu du mélange à partir d'homopolymères de propylène et/ou de copolymères de propylène, de copolymères d'éthylène/butène, de copolymères d'éthylène/hexène et/ou de copolymères d'éthylène/octène, ainsi qu'éventuellement d'adjuvants, de composés de diallyle en C₇ à C₁₆, de composés de divinyle en C₇ à C₁₀ et/ou de composés de triallyle en C₉ à C₁₂ en tant que monomères insaturés et/ou, en tant que formateurs de radicaux à décomposition thermique, de peroxydes d'acyle, de peroxydes d'alkyle, d'hydroperoxydes, de peroxycarbonates, de peresters, de peroxydes de cétone, de peroxycétales et/ou de composés azoïques.

8. Procédé pour la préparation d'élastomères thermoplastiques selon la revendication 6, **caractérisé en ce que** l'on réalise le mélange d'homopolymères de propylène et/ou de copolymères de propylène, de copolymères d'éthylène/butène, de copolymères d'éthylène/hexène et/ou de copolymères d'éthylène/octène et éventuellement d'adjuvants avec, en tant que monomères insaturés, des composés de diallyle en C₇ à C₁₆, des composés de divinyle en C₇ à C₁₀ et/ou des composés de triallyle en C₉ à C₁₂ et/ou, en tant que formateurs de radicaux à décomposition thermique, des peroxydes d'acyle, des peroxydes d'alkyle, des hydroperoxydes, des peroxycarbonates, des peresters, des peroxydes de cétone, des peroxycétales et/ou des composés azoïques, au moyen d'un prémélange que l'on réalise avant le dosage des mélanges dans la malaxeuse en continu.

9. Mise en oeuvre d'élastomères thermoplastiques selon une ou plusieurs des revendications 1 à 5 ainsi que de mélanges des élastomères thermoplastiques et de polyoléfines usuels dans l'industrie automobile, de préférence pour les raccords pour tuyaux, les tubes d'aspiration d'air, les manchons de raccord et les joints d'étanchéité, dans l'industrie des appareils électroménagers, de préférence pour les raccords et les joints d'étanchéité, dans l'industrie du bâtiment, de préférence pour l'étanchéification des fenêtres, pour les joints d'étanchéité destinés aux murs de séparation et aux jeux de dilatation, et dans le secteur de l'installation et dans la technique médicale, de préférence pour les tuyaux, les dispositifs d'étanchéité, les seringues et les pistons.
